# EUROPEAN PATENT APPLICATION

(11) **EP 3 838 083 A1**
(43) Date of publication of application: **23.06.2021**
(21) Application number: 19219153.4
(22) Date of filing: 20.12.2019
(51) Int. Cl.: A47J 36/00, G05B 19/418

(54) **SYSTEM FOR CONTROLLING THE OPERATION OF KITCHEN APPLIANCES**

(30) Priority: 18.12.2019 PT 2019116001
(71) Applicant: Modelo Continente Hipermercados, S.A., 4464-503 Senhora da Hora (PT)
(72) Inventor: FARIA ROCHA, Duarte Nuno, 3800-423 Aveiro (PT)
(74) Representative: do Nascimento Gomes, Rui

(57) **Abstract**

The present invention discloses a system for controlling the operation of kitchen appliances, with the aim of providing a controllable interoperability environment between a kitchen machine and a set of kitchen equipment. For that purpose, the system is based on a network architecture where the kitchen machine centralizes the control of all operations performed by the other kitchen equipment during the course of a cooking process. The communication between the kitchen machine and the kitchen equipment is provided by means of an adaptor module provided in the latter.

## Description

### FIELD OF THE INVENTION

The present invention is enclosed in the area of kitchen appliances. In particular, the present invention relates to a centralized control system designed to manage the operation of the kitchen appliances thereto connected.

### PRIOR ART

Many solutions exist in the art for providing automation and control of home appliances in general. In the particular domain of the kitchen appliances, several systems are already known which enable a user to control a kitchen appliance through a communication hub. An example of such kind of approach is given by document CN101408768A, wherein the communication hub is implemented through a radio frequency wireless network for connecting a remote-control terminal, an embedded platform and a kitchen appliance to be controlled. Based on the proposed architecture, an user is then allowed to control a kitchen appliance connected to the network through the embedded platform which actuates the remote control terminal that, in its turn, is responsible for programming the operation of the kitchen appliance according to the instructions set by the user.

The known solutions from the state of the art are based on network architectures built to centralize the control operations in a device which is external to the kitchen environment. Besides that, said device is only programmed to react upon a reception of an input command from an user, not being able to provide an autonomous and integrated control between all the kitchen appliances connected to the network. Therefore, the known solutions are silent regarding the control of the operation of a kitchen appliance as a function of the operative status of the other kitchen appliances of the network.

### SUMMARY OF THE INVENTION

It is therefore an object of the present invention to provide a controllable interoperability environment between a kitchen machine and a set of kitchen equipment connected by means of a communications network, which would allow that the operation of one of them be influenced by the operative status of others.

In an advantageous configuration of the present invention, it is proposed a system for controlling the operation of kitchen appliances comprising a communication network for connecting at least one kitchen machine and at least one kitchen equipment. For that purpose, the system comprises an adaptor module provided in a kitchen equipment which is programmed to collect operative data from said kitchen equipment, and an operative engine, embedded in the kitchen machine being configured to program the operation of its hardware elements according to at least one kitchen equipment's operative data transmitted by the respective adaptor module.

In another advantageous configuration, the kitchen appliances of the system work according to automatic cooking programs to be select for operation in the kitchen machine. Such automatic cooking programs comprise a set of instructions that are performed either by the kitchen machine hardware elements either by the kitchen equipment of the network. In this context, the execution of the referred set of instructions in each kitchen appliance is dependent on the continuous monitoring of each's operative status.

Yet in another advantageous configuration of the present invention, the kitchen machine of the system is further comprised by a scheduler module that prioritize the operation of kitchen appliances of the network based on a set of prioritization rules.

### DESCRIPTION OF FIGURES

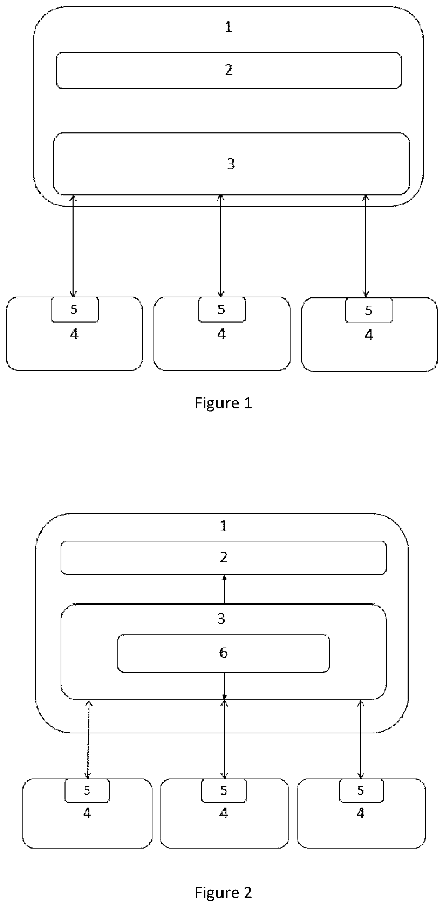

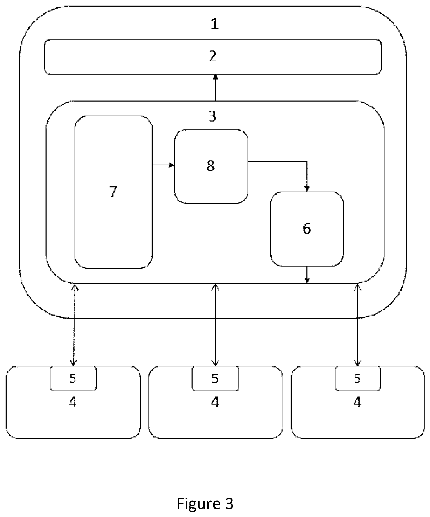

Figure 1 - representation of the main embodiment of system of the present invention, wherein the reference signs represent:
   1 - Kitchen machine;
   2 - Kitchen machine hardware elements;
   3 - operation engine;
   4 - kitchen equipment;
   5 - adaptor module.
Figure 2 - representation of an alternative embodiment of system of the present invention, wherein the reference signs represent:
   1 - Kitchen machine;
   2 - Kitchen machine hardware elements;
   3 - operation engine;
   4 - kitchen equipment;
   5 - adaptor module;
   6 - programmer module
Figure 3 - representation of an alternative embodiment of system of the present invention, wherein the reference signs represent:
   1 - Kitchen machine;
   2 - Kitchen machine hardware elements;
   3 - operation engine;
   4 - kitchen equipment;
   5 - adaptor module;
   6 - programmer module;
   7 - scheduler module;
   8 - Automatic cooking program's list.

### DETAILED DESCRIPTION

The more general and advantageous configurations of the present invention are described in the Summary of the invention. Such configurations are detailed below in accordance with other advantageous and/or preferred embodiments of implementation of the present invention.

In a preferred embodiment of the system for controlling the operation of kitchen appliances of the present invention, it comprises at least one kitchen machine connected to at least one kitchen equipment by means of wireless communication network. In the context of the present application, kitchen appliances should be understood as being either a set of kitchen equipment or a set of kitchen machines or any combination of those two. By kitchen equipment one should refer to any equipment that can be used for heating and/or cooling food ingredients during a cooking process. Preferably one may refer to a refrigerator, a stove, a microwave, an oven or a coffee machine, for example. On the other hand, a kitchen machine is a device electrically ran and comprised by i.) a mixing cup, ii.) mixing means provided in the mixing cup, iii.) a base station suitable for coupling of the mixing cup and which thereby is able to provide motion to the mixing means and iv.) heating and/or cooling means of the mixing cup.

In the preferred embodiment of the present invention, the system comprises an adaptor module provided in each kitchen equipment to be controlled. Said adaptor is programmed to collect operative data from the respective kitchen equipment for the purpose of continuously monitoring the part of the cooking process to be executed by said kitchen equipment. The adaptor module should be installed in a way to allow the monitoring of the operative parameters of a kitchen equipment, such as its temperature of operation and/or the period of operation. For that purpose, the adaptor module may be positioned inside the kitchen equipment or may be connected to it by means of a data peripheral port. Yet in the preferred embodiment of the invention, the kitchen machine further comprises an operation engine. Such operation engine is comprised by processing means configured to program the operation of the kitchen machine hardware elements i.) to iv.) according to at least one kitchen equipment's operative data transmitted by the respective adaptor module. The communication between kitchen machine, in particular its operation engine, and the adaptor modules is provided by means of a wireless communication network operating based on standards of a wireless personal area network or of a wireless local network or of a wireless wide area network.

In another embodiment of the present invention, the operation engine of the kitchen machine further comprises a programmer module configured to transmit a machine command to the adaptor module of a specific kitchen equipment. In this regard, the adapter module is comprised by processing means configured to control the operation of the respective kitchen equipment according to the machine command transmitted by the programmer module. Said machine command is a computer program written in machine language instructions that can be executed directly by the central processing unit of a kitchen equipment. The machine code may be comprised by at least two instruction fields. A first field comprises an identification code for identifying univocally each adapter module, and a second field comprises an instruction code adapted to cause the central processing unit of the elected kitchen equipment to perform a very specific task, such as setting periods of operation, temperature ranges and/or power levels.

In another embodiment of the system, the operation engine is configured to program the operation of the kitchen machine hardware elements i.) to iv.) and the operation of the at least one kitchen equipment connected to the communication network according to automatic cooking programs. Said automatic cooking programs are stored in a memory module of the operation engine of the kitchen machine and comprise at least one operative instruction for operating the kitchen machine hardware elements i.) to iv.) and at least one machine command for operating a specific kitchen equipment. In this way, the operation of a kitchen environment, comprised by a plurality of kitchen appliances, is centralized in the kitchen machine which may influence future operative steps of kitchen equipment connected to the network. For that purpose, the operation engine further comprises a scheduler module including processing means adapted to assigned a priority level to each operative instruction and to each machine command, based on a set of prioritization rules. The scheduler module is configured to scheduler the execution of the operative instructions and of the machine commands according to the highest priority level. The prioritization rules implemented by the scheduler module can be based on several metrics, such as, for example, providing a specific order for the operative instructions/machine commands so the shortest automatic cooking program's execution time could be achieved. Additionally, the prioritization rules can also be based on the periodic kitchen equipment's operative data collected from the respective adaptor module or in a combination of the both criteria.

As will be clear to one skilled in the art, the present invention should not be limited to the embodiments described herein, and a number of changes are possible which remain within the scope of the present invention.

Of course, the preferred embodiments shown above are combinable, in the different possible forms, being herein avoided the repetition all such combinations.

## Claims

1. System for controlling the operation of kitchen appliances comprising at least one kitchen machine connected to at least one kitchen equipment by means of wireless communication network; the kitchen machine is electrically ran and comprises i.) a mixing cup, ii.) mixing means provided in the mixing cup, iii.) a base station suitable for coupling of the mixing cup and which thereby is able to provide motion to the mixing means and iv.) heating and/or cooling means of the mixing cup;
**characterized in that**
the system further comprises an adaptor module provided in a kitchen equipment programmed to collect operative data from said kitchen equipment; and **in that**
the kitchen machine further comprises an operation engine configured to program the operation of the kitchen machine hardware elements i.) to iv.) according to at least one kitchen equipment's operative data transmitted by the respective adaptor module.

2. System according to claim 1 wherein the operative data collected by the adaptor module relates to temperature of operation and period of operation of the respective kitchen equipment.

3. System according to any of the previous claims, wherein
the operation engine further comprises a programmer module configured to transmit a machine command to the adaptor module of a specific kitchen equipment; and
the adapter module comprises processing means configured to control the operation of the respective kitchen equipment according to the machine command transmitted by the programmer module.

4. System according to claim 3 wherein the machine command is comprised by at least two instruction fields; a first field comprises an identification code adapted to identify univocally an adapter module, and a second field comprises an instruction code adapted to operate the kitchen equipment thereto connected.

5. System according to claim 4, wherein the instruction code is programmed to configure the following operation parameters of a kitchen equipment: periods of operation, temperature ranges and/or power levels.

6. System according to any of the previous claims 3 to 5, wherein the operation engine is configured to program the operation of the kitchen machine hardware elements i.) to iv.) and the operation of the at least one kitchen equipment connected to the communication network according to automatic cooking programs; such automatic cooking programs being stored in a memory module of the operation engine and comprise:
At least one operative instruction for operating the kitchen machine hardware elements i.) to iv.); and
At least one machine command for operating a specific kitchen equipment.

7. System according to claim 6, wherein the operation engine further comprises a scheduler module comprising processing means adapted to assigned a priority level to each operative instruction and to each machine command, based on a set of prioritization rules; the scheduler module being configured to scheduler the execution of the operative instructions and of the machine commands according to the highest priority level.

8. System according to claim 7, wherein said prioritization rules are based on the shortest automatic cooking program's execution time and/or one the kitchen equipment's operative data collected from the respective adaptor module.

9. System according to any of the previous claims wherein a kitchen equipment is a refrigerator and/or a stove and or a microwave and/or an oven and or a coffee machine.

10. System according to any of the previous claims wherein the wireless communication network operates based on standards of a wireless personal area network or of a wireless local network or of a wireless wide area network.
